# EUROPÄISCHE PATENTANMELDUNG

(11) **EP 0 585 626 A1**
(43) Veröffentlichungstag der Anmeldung: **09.03.1994**
(21) Anmeldenummer: 93112342.6
(22) Anmeldetag: 02.08.1993
(51) Int. Cl.: D04H 13/00

(54) **Kaschierte Mineralfasermatte**

(30) Priorität: 14.08.1992 DE 4227035
(71) Anmelder: HOECHST AKTIENGESELLSCHAFT, D-65926 Frankfurt am Main (DE)
(72) Erfinder: Häbich, Stefanie, D-86836 Graben (DE); Kroneis, Alfred, D-86153 Augsburg (DE); Heidel, Peter, Dr., D-86399 Bobingen (DE)

(57) **Zusammenfassung**

Beschrieben wird eine flammhemmende, verarbeitungfreundliche Mineralfasermatte mit einer ein- oder beidseitigen Kaschierung aus einem vorverfestigten Synthesefaservliesstoff, der ein Flächengewicht von 10 bis 100 g/m² hat und aus Polyester-Stapel- oder Endlosfaser besteht. Die Mineralfasermatte ist mit dem Synthesefaservliesstoff durch eine Klebstoffzubereitung mit einem Gehalt von 20-60 Gew% (fest auf fest gerechnet) eines organischen, Stickstoff und Phosphor enthaltenden Flammenschutzmittels verbunden, wobei das Klebstoffzubereitung in einer Menge von 3 bis 30 g/m² und pro Seite der Mineralfasermatte vorhanden ist. Ferner wird ein vorteilhaftes Verfahren zur Herstellung dieser kaschierten Mineralfasermatte beschrieben.

## Beschreibung

Die vorliegende Erfindung betrifft eine Mineralfasermatte mit einer beidseitigen Kaschierung aus einem Synthesefaservliesstoff, die gute flammhemmende Eigenschaften aufweist.

Mineralfasermatten werden im Bau- und Konstruktionswesen im großen Umfang zur Wärme- und Schallisolierung eingesetzt. Ein besonderer Vorteil der Mineralfasermatten besteht darin, daß sie aufgrund ihrer Unbrennbarkeit und hohen Wärmeisolierung sehr gute flammhemmende Eigenschaften aufweisen, daß heißt, daß sie der Ausbreitung von Bränden lange Zeit Widerstand leisten. Ein gravierender Nachteil der Mineralfasermatten besteht darin, daß sie aufgrund der Sprödigkeit der Mineralfasern zur Absonderung von Faserstaub, das heißt von Faserpartikeln mit einer Länge von Millimeterbruchteilen bis zu einigen Millimetern neigen. Diese Stäube, die bei der Handhabung der Matten z. B. beim Einbau in Bauwerke, Fahrzeuge und dergleichen entstehen und freigesetzt werden, führen zu einer Belästigung der damit Hantierenden. So kann es bei Personen, die den Mineralfaserstäuben ausgesetzt sind zu Juckreiz auf der Haut und Hustenreiz kommen. Auch im eingebauten Zustand können durch Erschütterungen oder Luftbewegungen Faserstäube aus den Matten ausgetragen werden und den Gebrauchswert der gedämmten Einrichtungen vermindern. Die Steifheit und Sprödigkeit der Mineralfasern hat darüberhinaus zur Folge, daß Mineralfasermatten einen harschen, rauhen Griff haben, der ebenfalls die Handhabung und Verarbeitung der Matten erschwert und bei Personen mit entsprechender Disposition zu Hautreizungen führen kann.
Schließlich ist auch die Oberfläche der Mineralfasermatten relativ leicht verletzlich, locker und wenig griffstabil. Ein fester Zugriff kann daher leicht zu einer zumindest oberflächlichen Zerstörung des Faseraufbaus führen. Die Notwendigkeit der besonders vorsichtigen Handhabung trägt ebenfalls zur Erschwerung der Verarbeitung bei.

Die vorliegende Erfindung betrifft nun eine Mineralfasermatte, die in deutlich geringerem Maße zur Freisetzung von Mineralfaserstaub neigt und die eine berührungs- und verarbeitungsfreundlichere Oberfläche hat als bisher bekannte Matten. Dabei erfüllt die erfindungsgemäße Matte gleichzeitig wesentliche Forderungen der mattenverarbeitenden Industrie, daß sich nämlich das günstige Flammschutzverhalten der Mineralfasermatten nicht verschlechtern darf, daß sie auf einfache Weise herstellbar sind und damit preisgünstig angeboten werden können.
Gegenstand der vorliegenden Erfindung ist eine Matte, die bei deutlich verringerter Staubneigung und verbesserter Verarbeitungsfreundlichkeit diese Forderung der Industrie erfüllt.

Die erfindungsgemäße Mineralfasermatte ist mit einem Duroplastharz vorverfestigt und weist eine ein- oder beidseitige Kaschierung aus einem Synthesefaservliesstoff auf. Die Matte ist dadurch gekennzeichnet, daß der aufkaschierte Synthesefaservliesstoff bindemittelfrei vorverfestigt ist und ein Flächengewicht von 10 bis 100 g/m² hat und die Mineralfasermatte mit dem Synthesefaservliesstoff durch eine Klebstoffzubereitung mit einem Gehalt von 20-60 Gew% (fest auf fest gerechnet) eines organischen, Stickstoff und Phosphor enthaltenden Flammenschutzmittels verbunden ist und daß die Klebstoffzubereitung in einer Menge von 3 bis 30 g/m² und pro Seite der Mineralfasermatte vorhanden ist.

Die Stärke der erfindungsgemäß kaschierten Mineralfasermatte hängt von dem vorgesehenen Einsatzgebiet ab. Für die Isolierung von Baukonstruktionen, beispielsweise von Dachböden, beim Bau feuerhemmender Türen, in Kraftfahrzeugkonstruktionen oder für Schallschutzzwecke werden üblicherweise Mineralfasermatten in einer Stärke von 2 bis 20 cm eingesetzt.

Die Mineralfasermatten bestehen aus Steinwolle, Glasfasern oder Keramikfasern. Bezüglich des Flächengewichts, des Fasertiters und der Faserlänge entsprechen sie den Spezifikationen bekannter Mineralfasermatten.

Die erfindungsgemäßen Mineralfasermatten sind mit einem Duroplastharz vorverfestigt. Duroplastharze, die für diesen Zweck eingesetzt werden können, sind Epoxydharze, Harnstoffharze, Melaminharze oder Phenolharze. Derartige Harze sind bekannt und werden in der Technik in großem Umfang eingesetzt. Besonders bevorzugt für die Vorverfestigung der erfindungsgemäßen Mineralfasermatten sind bekannte Phenolharze.

Der für die Kaschierung eingesetzte Synthesefaservliesstoff hat vorzugsweise ein Flächengewicht von 10 bis 100 g/m². Ein Synthesefaservliesstoff im Sinne dieser Erfindung enthält mindestens 50 Gew.% Synthesefasern und maximal 50 Gew.% Naturfasern wie z.B. Zellulosefasern, oder Zelluloseregenerat-Fasern wie z.B. Viskosefasern. Vorzugsweise besteht der Synthesefaservliesstoff zu mehr als 80 Gew. %, insbesondere zu 100 Gew.% aus Synthesefasern. Bevorzugt als Synthesefasern sind Polyesterfasern, insbesondere aus Polyethylenterephthalat. Die Fasern können Stapel- oder Endlosfasern sein.
Die Stapelfasern der erfindungsgemäß einzusetzenden Synthesefaservliesstoffes haben zweckmäßigerweise eine Stapellänge von
3 bis 30 mm und können nach bekannten Verfahren trocken oder nass abgelegt worden sein.
Bevorzugt besteht der Synthesefaservliesstoff der erfindungsgemäßen kaschierten Mineralfasermatte jedoch aus Endlosfasern, insbesondere handelt es sich dabei um ein sogenanntes Spunbond.

Die Fasern des Synthesefaservliesstoffes haben zweckmäßigerweise einen Titer von 1 bis 10, vorzugsweise 2 bis 7 dtex und bestehen aus Polyestern, die als Hauptkomponente Terephthalsäure und Ethylenglycol aufweisen. Neben den genannten Grundbausteinen können diese Polyester weitere, ihre Eigenschaften modifizierende Dicarbonsäure- und/oder Diolbausteine aufweisen, wie z. B. Reste Isophthalsäure, aliphatischer Dicarbonsäuren mit in der Regel 6 bis 10 Kohlenstoffatomen der Sulfoisophthalsäure, Reste von längerkettigen Diolen mit in der Regel 3 bis 8 Kohlenstoffatomen, Etherdiolen z. B. Diglycol- oder Triglycol-Resten oder auch geringe Anteile von Polyglycolresten. Diese modifizierenden Komponenten sind in der Regel zu nicht mehr als 15 mol-% in die Polyester einkondensiert. Bevorzugt werden Synthesefaservliesstoffe aus Fasern die aus Polyethylenterephthalat mit einem Gehalt von unter 5 mol-% modifizierenden Komponenten, insbesondere aber aus reinem unmodifizierten Polyethylenterephthalat oder Polybutylenterephthalat bestehen. Die Synthesefaservliese sind in ansich bekannter Weise mechanisch oder thermisch vorverfestigt.
Die mechanische Vorverfestigung erfolgt z.B. durch mechanisches oder hydraulisches Vernadeln. Zur Ausführung dieser beiden Verfahren sind Aggregate im Handel. Eine Beschreibung dieser Methoden findet sich z.B.in Koch/Satlow, Großes Textil-Lexikon, Bd.L-Z, Seite 96 ("Nadelmaschine") sowie in Chemiefasern/Textilindustrie, 24/76 (1974), Seite 642.
Die thermische Vorverfestigung kann autogen erfolgen, d.h. zum Beispiel durch mechanische Pressung eines Synthesefaservlieses aus frisch ersponnenen Filamenten oder, insbesondere bei höheren Flächengewichten des Vliesstoffes, durch den Einsatz von Schmelzbindern.
Die durch Schmelzbinder verfestigten Vliese enthalten neben den tragenden Polyesterfasern einen Schmelzbinder, der ebenfalls zweckmäßigerweise aus Polyestern besteht und vorzugsweise ebenfalls in Form von sogenannten Bindefasern in den Synthesefaservliesstoff eingebracht wird. Die Verfestigung dieser Fasermischung erfolgt durch Erwärmen über den Schmelzpunkt der Bindefaser, wobei diese schmelzen und die nicht-schmelzenden sogenannten tragenden Polyesterfasern des Synthesefaservlieses vorzugsweise an den Kreuzungspunkten miteinander verbinden. Die Polyester der Bindefasern bestehen ebenfalls aus den obengenannte Monomerbausteinen, wobei die modifizierenden Komponenten so ausgewählt werden, daß der Schmelzpunkt der Bindefasern mindestens 10° vorzugsweise mindestens 20°C unter dem Schmelzpunkt der tragenden Polyesterfilamente liegt.
Der Schmelzbinderanteil in den Synthesefaservliesen, gleichgültig ob er in Form von Bindefilamenten oder in anderer Form in das Vlies eingebracht wurde, liegt zweckmäßigerweise zwischen 5 und 25 Gew.-%, vorzugsweise 7 bis 15 Gew.-% des Gewichts des Spinnfaservliesstoffs.

Die Mineralfasermatte ist mit den Synthesefaservliesstoffen durch eine Klebstoffzubereitung verbunden, die als Klebekomponente 40 bis 80 Gew.-%, fest auf fest gerechnet, eines Duroplastharzes oder eines Alkancarbonsäurevinylester-Homo- oder Copolymers enthält und als Flammschutzkomponente 60 bis 20 Gew.-% einer organischen, Stickstoff und Phosphor enthaltenden Verbindung.
Bevorzugt werden Klebstoffzubereitungen eingesetzt, deren Klebekomponente und Flammschutzkomponente halogenfrei sind. Die Komponenten müssen auch unempfindlich sein gegen die hohen Fertigungs- und Verarbeitungstemperaturen der Mineralfasermatten.

Als Klebekomponente der Klebstoffzubereitung eigenen sich die Duroplastharze, die oben bereits für die Vorverfestigung der Mineralfasermatte beschrieben worden sind. Von den Duroplastharzen sind die Phenolharze als Klebekomponente in den Klebstoffzubereitung bevorzugt. Die Wahl von Duroplastharzen, insbesondere von Phenolharzen zur Verklebung von Mineralfasermatte und Synthesefaservlies hat den zusätzlichen Vorteil, daß das gleiche Harz für die Vorverfestigung der Mineralfasermatte und auch für die Verklebung von Mineralfasermatte und Synthesefaservlies eingesetzt werden kann.

Sehr gut geeignet als Klebekomponente der Klebstoffzubereitung sind auch Polymere von Vinylestern von Alkancarbonsäuren mit 1 bis 5 C-Atomen, insbesondere mit 2 bis 3 C-Atomen oder aber Bis- oder Terpolymere eines solchen Alkancarbonsäureesters mit einem zweiten Carbonsäurevinylester mit 5 bis 15 C-Atomen in der Carbonsäuregruppe einem Alken mit 2 bis 4 C-Atomen, einer Alkenmono- oder Dicarbonsäure mit 2 bis 6 C-Atomen oder einem Ester oder Amid einer solchen oder aus einer Mischung der genannten Polymerisate. Besonders bevorzugt sind ferner erfindungsgemäße kaschierte Mineralfasermatten, bei denen die Verklebung zwischen Mineralfasermatte und Synthesefaservliesstoff durch eine Klebstoffzubereitung bewirkt wird, die als Klebekomponente ein Homopolymerisat des Vinylacetats oder ein Copolymerisat aus Vinylacetat und Dibutylmaleinat ist.
Die Verwendung von Klebekomponenten, die teilweise oder vollständig aus Homo- oder Copolymerisaten der Acrylsäure und/oder Methacrylsäure und/oder deren Estern mit Alkanolen mit 1-4 C-Atomen bestehen, ist ebenfalls möglich. In diesem Fall ist es zweckmäßig, die Menge der Flammschutzkomponente im oberen Teil des oben angegebenen Anteilsbereichs zu wählen.

Beispiele für Klebekomponenten, die für die Verbindung von Mineralfasermatte und Synthesefaservlies eingesetzt werden können, sind:
Vinylacetat, Vinylacetat/Dibutylmaleinat, Vinylacetat/n-Butylacrylat, Vinylacetat/2-Ethylhexylacrylat, Vinylacetat/n-Butylacrylat/N-Hydroxymethylacrylamid, Vinylacetat/Crotonsäure, Vinylacetat/N-Hydroxymethylacrylamid, Vinylacetat/Vinyllaurat, Vinylacetat/Ethylen, Vinylacetat/Ethylen-acrylamid, Vinylacetat/Ethylen/N-Hydroxymethylacrylamid, Vinylacetat/Crotonsäure auf Polyglycol, Vinylacetat/N-Vinylpyrrolidon, Vinylpropionat, und Vinylpropionat/tert.-Butylacrylat sowie Copolymerisate des Versaticsäurevinylesters (Versaticsäure = synthetische aliphatische tertiäre C₁₀-Karbonsäure der Fa Shell) mit Vinylacetat, mit Vinylacetat/Acrylsäure, mit Vinylacetat/n-Butylacrylat oder mit Styrol/Acrylester/ und/oder Maleinat.

Als Klebekomponente gut geeignete Handelsprodukte sind beispielsweise die Polyvinylacetatdispersionen ®APPRETAN DB, ®APPRETAN EM, ®VINNAPAS M 50300 und die Acrylat/Styrol-Copolymerisatdispersion ®APPRETAN 9630

Die die Verbindung zwischen Mineralfasermatte und Synthesefaservlies bewirkende Klebstoffzubereitung enthält neben der Klebekomponente ein oder mehrere Flammschutzkomponenten auf der Basis von halogenfreien, Stickstoff und Phosphor enthaltenden Verbindungen. Bevorzugt sind stickstoffhaltige Salze oder Derivate der Phosphorsäure oder von Phosphonsäuren, insbesondere von Estern oder Teilestern dieser Säuren. Eine Übersicht, die zahlreiche als Flammschutzkomponente geeignete Verbindungen enthält, findet sich beispielsweise in Kirk Othmer, Encyclopedia of Chemical Technologie, 3. Ausgabe, Band 10, S. 406 und ff. Besonders Vorteilhaft als Flammschutzkomponente sind Derivate der Methylphosphonsäure, beispielsweise das unter dem Handelsnamen ®NOPYRON OP vertriebene Salz einer organischen Aminoverbindung und einer phosphorhaltigen Säure oder die unter dem Name ®PEKOFLAM PES vertriebene organische cyclische Phosphorverbindung der Firma Dick Peters BV.

In der erfindungsgemäßen kaschierten Mineralfasermatten liegt die flammhemmende Klebstoffzubereitung auf jeder Seite der Mineralfasermatte in einer Menge von 3 bis 30, vorzugsweise 10 bis 20 g/m² vor.

Zur Herstellung der erfindungsgemäßen kaschierten Mineralfasermatte wird eine mit einem Duroplastvorkondensat imprägnierte Mineralfasermatte ein-oder beidseitig mit einem vorverfestigten Synthesefaservliesstoff zusammengeführt, wobei vor der Vereinigung des Vliesstoffes mit der Mineralfasermatte auf die Berührungsflächen der beiden Materialien eine Lösung einer Klebstoffzubereitung mit einem Gehalt von 20-60 Gew% (fest auf fest gerechnet) eines organischen, Stickstoff und Phosphor enthaltenden Flammenschutzmittels appliziert wird, und zur Abbindung der Klebstoffzubereitung und gleichzeitigem Aushärten des Duroplastharzes unter einem Druck der den einwandfreien Flächenkontakt von Mineralfasermatte und Synthesefaservliesstoff gewährleistet, durch eine Heizzone geführt, gegebenenfalls kalandriert und anschließend aufgewickelt.

Die Applikation der Klebstoffzubereitung erfolgt in an sich bekannter Weise, beispielsweise durch Pflatschen, Sprühen oder Bürsten.

Die erfindungsgemäße kaschierte Mineralfasermatte, die ein wie ober definiertes Synthesefaservlies zur Abdeckung der Mineralfaserschicht aufweist, das mit der oben beschriebenen Klebstoffzubereitung auf der Mineralfasermatte fixiert ist, weist ein ausgezeichnetes Flammschutzverhalten auf, obwohl das oben beschriebene Synthesefaservlies die für ein solches Material übliche Brennbarkeit hat.
Dieser überraschende Effekt ist auf die unvorhersehbar starke Flammschutzwirkung der in der oben angegebenen Menge eingesetzten Klebstoffzubereitung zurückzuführen.

Obwohl erfindungsgemäße kaschierte Mineralfasermatten mit Vliesstoffen, bestehend aus den oben genannten, gegebenenfalls modifizierten Polyestern, insbesondere aus Polyethylenterephthalat, bereits ein überraschend gutes Flammschutzverhalten zeigen, läßt sich dieses für extreme Anforderungen noch weiter verbessern, wenn man die Bindefasern bzw. das anderweitig geformte Bindermaterial oder die tragenden Filamente des Vlieses oder beide, Binde- und tragende Filamente des Vlieses aus Polyestern herstellt, die in der Polyesterkette Baugruppen der Formel I, 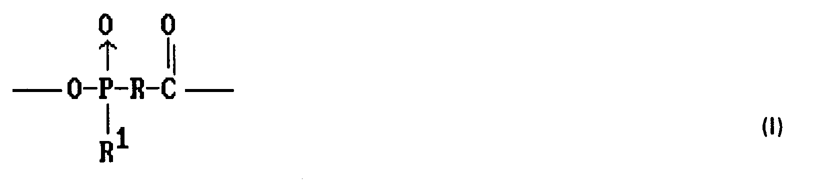
worin R ein gesättigter, offenkettiger oder cyclischer Kohlenwasserstoff ist, mit 1 bis 15 C-Atomen oder ein Arylen oder Aralkylenrest und R¹ ein Alkylrest mit bis zu 6 C-Atomen ein Aryl- oder Aralkylrest ist, enthalten.
Vorzugsweise bedeutet in der Formel I R Alkylen oder Polymethylen mit 2 bis 6 C-Atomen, insbesondere Ethylen oder Phenyl und R¹ Alkyl mit 1 bis 6 C-Atomen, insbesondere Methyl oder Ethyl, Aryl oder Aralkyl, insbesondere Phenyl oder o-, m- oder p-Methylphenyl.

Die flammhemmend modifizierten Polyester enthalten von den Kettengliedern der Formel I 2 bis 20 mol-%, vorzugsweise 4 bis 10 mol-% bezogen auf die Säurekomponenten des Polyesters.

Bei Synthesefaservliesstoffen, die sowohl im Schmelzbinderanteil als auch in den tragen Filamenten flammhemmend modifizierte Polyester enthalten, ist dafür zu sorgen, daß der Schmelzpunkt des flammhemmenden Binders wiederum 10 bis 20°C unter dem Schmelzpunkt des flammhemmend modifizierten Polyesters der tragenden Filamente liegt. Dies wird dadurch erreicht, daß man den Binderpolyester zusätzlich zu der flammhemmenden Modifizierung mit weiteren modifizierenden Komponenten aus der oben aufgezählten Gruppe cokondensiert oder daß man die Grundeinheiten des Polyesters so variiert, daß sich ein niedrigerer Schmelzpunkt ergibt. Beispielsweise kann ein Synthesefaservlies dessen tragenden Filamente aus flammhemmend modifizierten Polyethylenterephthalat bestehen, mit einem Binder aus flammhemmend modifiziertem Polybutylenterephthalat gebunden werde.

Selbstverständlich ist es auch möglich, Synthesefaservliese deren tragende Filamente aus flammhemmend modifiziertem Polyester z. B. flammhemmend modifiziertem Polyethylenterephthalat bestehen, dadurch zu verfestigen, daß man sie in der oben bereits angegebenen Weise vernadelt.

Vorzugsweise bestehen die Binderfilamente aus einem isophthalsäuremodifizierten Polyester mit einem entsprechend abgesenkten Schmelzpunkt.

Vorzugsweise bestehen flammhemmend modifizierte Bindefilamente und Binder aus einem mit Isophthalsäuregruppen und Gruppen der Formel I modifizierten Polyethylenterephthalat.

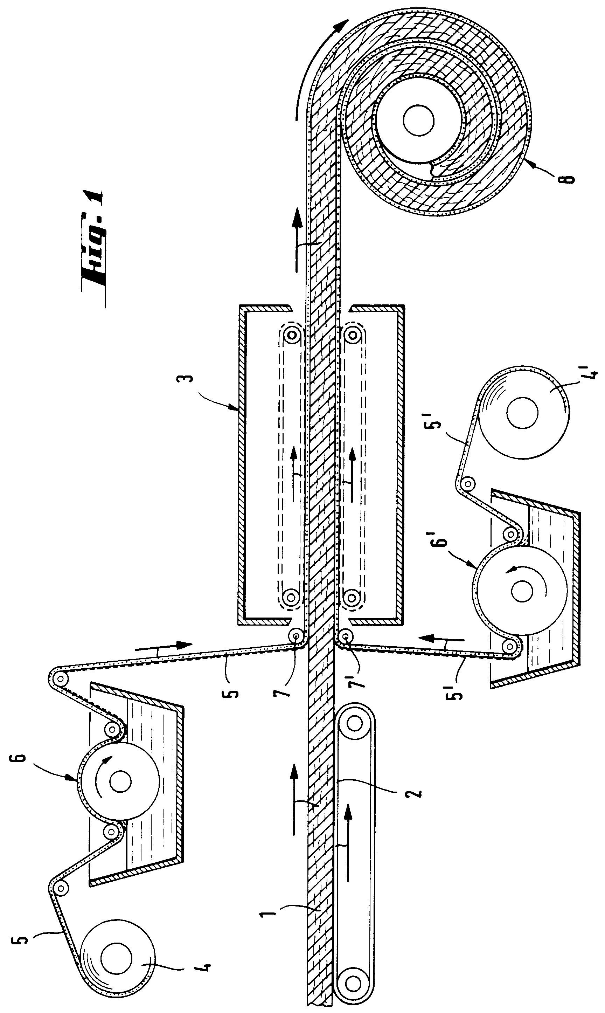

Die Figur 1 zeigt schematisch eine Vorrichtung zur Herstellung der erfindungsgemäßen kaschierten Mineralfasermatte. Die mit Duroplastharz imprägnierte Mineralfasermatte (1) wird von dem Transportband (2) dem Siebbandtrockner (3) zugeführt.
Gleichzeitig laufen von Vorratsrollen (4, 4') Feinvliesbahnen (5, 5') ab, werden in den Pflatschwerken (6, 6') mit einer Klebstoffzubereitung beaufschlagt und über die Stütz- und Umlenkrollen (7, 7') der Ober- und der Unterseite der Mineralfasermatte vor deren Einlauf in den Siebbandtrockner zugeführt. Nach Durchlaufen des Siebbandtrockners wird die kaschierte Matte auf der Aufrollvorrichtung (8) aufgewickelt.

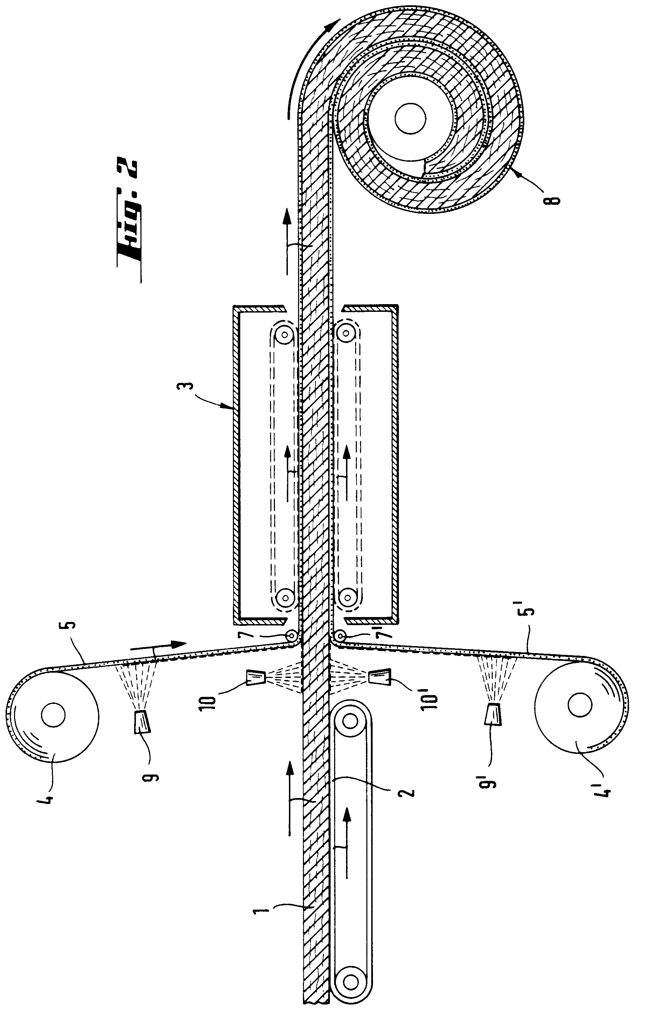

Die Figur 2 zeigt ebenfalls schematisch eine Vorrichtung zur Herstellung der erfindungsgemäßen kaschierten Mineralfasermatte, wobei anstelle der Platschwerke Sprühdüsen (9, 9'), oder alternativ (10, 10') installiert sind, die die zu verklebenden Oberflächen der Vliesstoffbahnen (Sprühdüsen 9, 9') oder der Mineralfasermatte (Sprühdüsen 10, 10') mit der Klebstoffzubereitung besprühen.

Ein besonderer Vorteil dieses Herstellungsverfahrens der erfindungsgemäßen kaschierten Mineralfasermatten liegt darin, daß die Kaschierung gleichzeitig mit der Verfestigung der Mineralfasermatte erfolgt, so daß für die Kaschierung kein eigener Verfahrensschritt erforderlich ist.

Die folgenden Ausführungsbeispiele veranschaulichen die Herstellung einer erfindungsgemäßen, beidseitig kaschierten Mineralfasermatte.

### Beispiel 1

Eine Mineralfasermatte wird wird entsprechend dem in der Mineralwollindustrie gängigen Verfahren hergestellt und mit einer handelsüblichen wäßrigen Phenolharzlösung eingesprüht und durchtränkt.
Die harzimprägnierte Matte wird über ein Transportband, einem Siebbandtrockner mit Drucklatten zugeleitet, der auf eine Temperatur 200-240°C erwärmt ist. Vor dem Einlauf der Mineralfasermatte in den Ofen wird ihr auf der Unter- und auf der Oberseite ein bindemittelfreier, thermisch verfestigter Feinvliesstoff aus endlosen Polyesterfilamenten ((R)Trevira) mit einem Flächengewicht von 15 g/m², das mit 50 g/m² (tel quel) eines Klebemittels, hergestellt durch Mischen von
ca. 41 Gew.% einer Vinylacetatdispersion (50 % Feststoff) und
ca. 41 Gew.% Wasser und
ca. 30 Gew.% eines Flammschutzmittels (50 % Feststoff) bepflatscht wurde, zugeführt.
Anstelle durch Bepflatschen kann das Klebemittel auch durch Sprühauftrag appliziert werden.

Nach dem Durchlaufen des Siebbandtrockners wird das abgebundene kaschierte Mineralfaservlies aufgewickelt.

Die so erhaltene kaschierte Mineralfasermatte hat einen verarbeitungsfreundlichen, weichen, textilen Griff mit einer verbesserten Griffestigkeit der Oberfläche und sie neigt bei normaler Handhabung deutlich weniger zum Stauben als herkömmliche Matten. Dabei entspricht sie den von DIN 4102 B1 bzw. Northfire-Test 30 festgelegten Flammschutzspezifikationen.

### Beispiel 2

Eine feinvlieskaschierte Mineralfasermatte wird gemäß Beispiel 1 hergestellt mit dem Unterschied, daß als Klebemittel eine Mischung aus
ca. 70 Gew.% der für die Verfestigung der Mineralfasermatte eingesetzten Phenolharzlösung und
ca. 30 Gew.% des Flammschutzmittels (50 % Feststoff) eingesetzt wird.

Auch die so erhaltene kaschierte Mineralfasermatte hat einen verarbeitungsfreundlichen, weichen, textilen Griff mit einer verbesserten Griffestigkeit der Oberfläche und sie neigt bei normaler Handhabung deutlich weniger zum Stauben als herkömmliche Matten. Dabei entspricht sie den von DIN 4102 B1 bzw. Northfire-Test 30 festgelegten Flammschutzspezifikationen.

## Patentansprüche

1. Mineralfasermatte mit einer ein- oder beidseitigen Kaschierung aus einem Synthesefaservliesstoff, wobei die Mineralfasermatte mit einem Duroplastharz vorverfestigt ist, dadurch gekennzeichnet, daß der Synthesefaservliesstoff bindemittelfrei vorverfestigt ist und ein Flächengewicht von 10 bis 100 g/m² hat und die Mineralfasermatte mit dem Synthesefaservliesstoff durch eine Klebstoffzubereitung mit einem Gehalt von 20-60 Gew% (fest auf fest gerechnet) eines organischen, Stickstoff und Phosphor enthaltenden Flammenschutzmittels verbunden ist und daß die Klebstoffzubereitung in einer Menge von 3 bis 30 g/m² und pro Seite der Mineralfasermatte vorhanden ist.

2. Kaschierte Mineralfasermatte gemäß Anspruch 1, dadurch gekennzeichnet, daß der Synthesefaservliesstoff aus Endlosfasern besteht.

3. Kaschierte Mineralfasermatte gemäß mindestens einem der Ansprüche 1 und 2, dadurch gekennzeichnet, daß die Fasern des Synthesefaservliesstoffes aus Polyester bestehen.

4. Kaschierte Mineralfasermatte gemäß mindestens einem der Ansprüche 1 bis 3, dadurch gekennzeichnet, daß die Fasern des Synthesefaservliesstoffes aus Polyethylenterephthalat bestehen.

5. Kaschierte Mineralfasermatte gemäß mindestens einem der Ansprüche 1 bis 4, dadurch gekennzeichnet, daß die Fasern des Synthesefaservliesstoffes aus einem flammhemmend modifizierten Polyester bestehen.

6. Kaschierte Mineralfasermatte gemäß Anspruch 5, dadurch gekennzeichnet, daß der flammhemmende Polyester eine Hydroxyalkanphosphonsäure einkondensiert enthält.

7. Kaschierte Mineralfasermatte gemäß mindestens einem der Ansprüche 1 bis 6, dadurch gekennzeichnet, daß das Duroplastharz ein Epoxydharz, ein Harnstoffharz, ein Melaminharz oder ein Phenolharz ist.

8. Kaschierte Mineralfasermatte gemäß mindestens einem der Ansprüche 1 bis 7, dadurch gekennzeichnet, daß die Klebstoffzubereitung als Klebekomponente ein Duroplastharz enthält.

9. Kaschierte Mineralfasermatte gemäß mindestens einem der Ansprüche 1 bis 8, dadurch gekennzeichnet, daß die Klebstoffzubereitung als Klebekomponente ein Phenolharz enthält.

10. Kaschierte Mineralfasermatte gemäß mindestens einem der Ansprüche 1 bis 7, dadurch gekennzeichnet, daß die Klebstoffzubereitung als Klebekomponente einen Vinylester einer Alkancarbonsäure mit 1 bis 5 C-Atomen vorzugsweise mit 2 bis 3 C-Atomen enthält.

11. Kaschierte Mineralfasermatte gemäß Anspruch 10, dadurch gekennzeichnet, daß die Klebstoffzubereitung als Klebekomponente ein Homopolymerisat des Vinylacetats oder ein Co-Polymerisat aus Vinylacetat und Dibutylmaleinat ist.

12. Kaschierte Mineralfasermatte gemäß mindestens einem der Ansprüche 1 bis 11, dadurch gekennzeichnet, daß die Klebestoffzubereitung als Flammschutzkomponenten ein stickstoffhaltiges Phosponsäure- oder Phosphorsäurederivat enthält.

13. Verfahren zur Herstellung der kaschierten Mineralfasermatte des Anspruchs 1, dadurch gekennzeichnet, daß eine mit einem Duroplastvorkondensat imprägnierte Mineralfasermatte ein-oder beidseitig mit einem vorverfestigten Synthesefaservliesstoff zusammengeführt wird, wobei vor der Vereinigung des Vliesstoffes mit der Mineralfasermatte auf die Berührungsflächen der beiden Materialien eine Lösung einer Klebstoffzubereitung mit einem Gehalt von 20-60 Gew% (fest auf fest gerechnet) eines organischen, Stickstoff und Phosphor enthaltenden Flammenschutzmittels appliziert wird, und zur Abbindung der Klebstoffzubereitung und gleichzeitigem Aushärten des Duroplastharzes unter einem Druck der den einwandfreien Flächenkontakt von Mineralfasermatte und Synthesefaservliesstoff gewährleistet, durch eine Heizzone geführt, gegebenenfalls kalandriert und anschließend aufgewickelt wird.
